# EUROPEAN PATENT SPECIFICATION

(11) **EP 1 209 069 B1**
(45) Date of publication and mention of the grant of the patent: **04.05.2005**
(21) Application number: 01127269.7
(22) Date of filing: 16.11.2001
(51) Int. Cl.: B62D 29/00, B62D 25/08

(54) **Car body front structure for automobiles**
Fahrzeugaufbau für einen Vorderwagen eines Kraftfahrzeugs
Structure avant de caisse de véhicule automobile

(30) Priority: 28.11.2000 JP 2000361050; 28.11.2000 JP 2000361051; 28.11.2000 JP 2000361052; 29.11.2000 JP 2000362212
(43) Date of publication of application: 29.05.2002
(73) Proprietor: Daihatsu Motor Co., Ltd., Ikeda City, Osaka Prefecture (JP)
(72) Inventor: Teramae, Hideki, Ikeda City, Osaka Prefecture (JP); Nobuya, Nakade, Ikeda City, Osaka Prefecture (JP)
(74) Representative: Hering, Hartmut, Dipl.-Ing.

(56) References cited:
- EP-A- 0 437 780
- WO-A-99/54187
- FR-A- 2 655 605

## Description

The present invention relates to a car body front structure for automobiles, comprising a pair of right and left side members and a radiator support supported by the front ends of these two side members.

Such car body front structure for automobiles is disclosed in Japanese Patent Unexamined Publication No. 7-165117, which is a first conventional technique.

According to said publication, a car body front structure comprises a pair of right and left side members extending lengthwise of the car body, and a radiator support supported by the front ends of these two side members.

Further, said radiator support comprises a pair of right and left vertically extending support side members constituting side portions widthwise of the car body (hereinafter referred to as "widthwise") the radiator support, an upper cross member extending "widthwise" and joining the upper ends of said support side members, and a lower cross member extending "widthwise" and joining the lower ends of said support side members. And, the longitudinal (vertical) intermediate portion of each said support side member is supported by the front end of each said side member.

A pair of right and left radiators are supported on said radiator support. Each of these radiators, looking at the front of the car body, is in the form of a rectangle of the same shape and size, and the radiator support supporting these two radiators is in the form of a rectangle elongated "widthwise."

Further, said radiator support is formed in each said support side member and has a pair of right and left support sections supported by the front ends of said side members.

Each said support section is in the form of a box which opens rearwardly. More particularly, each said support section comprises a pair of right and left side plates nipping the front end of said side member from right and left, upper and lower plates nipping the front end of said side member from above and below, and a front plate closing the front end opening in the internal space surrounded by these plates, each said support section being removably fitted on the front end of each said side member from the front.

In the first conventional technique described above, when it is desired to perform the operation of assembling said radiator support to said right and left side members, first, the support section of said radiator support is positioned in front of each said side member. Then, said radiator support is moved backward and each support section of said radiator support is fitted on the front end of each said side member. Further, said radiator support is moved backward and the front surface plate of each said support section is abutted against the front end surface of each said side member. In the fitted state described above, each said support section is joined to the front end of each said side member. Thereupon, said assembling operation is completed.

On one hand, as a second conventional technique, there is an arrangement comprising a single radiator supported at its upper and lower ends by the respective "widthwise" intermediate portions of the upper and lower cross members.

Incidentally, in the case where the single radiator shown as the second conventional technique is supported by said "widthwise" extending rectangular radiator support shown as the first conventional technique, the outside dimension of said radiator support ends to be excessive as compared with the outside dimension of the radiator, so that the weight of the radiator support becomes excessive. Further, there is also a problem that the operation of assembling the radiator support to the front end of said side member becomes troublesome by an amount corresponding to the excessive weight.

Further, as shown as the first conventional technique, said radiator support is large-sized and heavy. Therefore, in the operation of assembling said radiator support, first, when the support section of said radiator support is fitted on the front end of said side member, it is not easy to align the rear end opening in the internal space of said support section with the front end of said side member, the operation of such external fitting is troublesome. Thus, the operation of assembling the radiator support to the front end of said side member is troublesome.

Further, as described above, since the support section is in the form of a box which opens rearwardly, entrance of water into the internal space of the support section would result in the water tending to stay there. Therefore, the front end of said side member can easily rust.

An object of the present invention is to provide a car body front structure adapted to support a radiator on the intermediate portion of a radiator support "widthwise" of the car body, wherein the outside dimension of said radiator support is prevented from becoming excessive as compared with the outside dimension of said radiator to reduce the weight of said radiator support.

Another object of the invention is to facilitate the assembling operation of said radiator support in a car body front structure.

Another object of the invention is to provide a car body front structure comprising a pair of right and left side members and a radiator support supported by the front ends of said side members, wherein the operation of assembling the radiator support to the front ends of said side members is facilitated.

Another object of the invention is to provide an arrangement wherein water is prevented from staying in the support portion of a radiator support supported by the front end of said side members so as to prevent rusting of the front ends of said side members, and even in this case, stress concentration is prevented from occurring in a portion of said car body frame to ensure that the strength of the car body frame is satisfactorily maintained.

The invention provides a car body front structure for automobiles, comprising a pair of right and left side members extending lengthwise of a car body, and a radiator support supported at each side by the front ends of these two side members, said radiator support comprising a pair of right and left support side members constituting the widthwise sides of the car body and vertically extending, an upper cross member extending in said widthwise direction to join the upper ends of said support side members, and a lower cross member extending in said widthwise direction to join the lower ends of said support side members, said support side members being supported at their lengthwise intermediate portions by the front ends of said side members, the widthwise intermediate portion of said lower cross member supporting the lower end of said radiator, said car body front structure for automobiles being characterized in that
the portions of said lower cross member between the intermediate portions of said support side members and the intermediate portion of said lower cross member are so molded that in said widthwise direction, obliquely upwardly inclined as they extend from the intermediate portion of the lower cross member to the outer sides, where said lower cross member joins the lower ends of said support side members (32,32).

Other objects, arrangements, operations and effects of the invention will become more apparent from a detailed description of the invention to be later given herein with reference to the drawings.

### BRIEF DESCRIPTION OF THE DRAWINGS

The drawings show preferred embodiments of the invention.
Fig. 1 is, in a first embodiment, a front view of a car body front;
Fig. 2 is, in the first embodiment, a side view, in section, of the car body front;
Fig. 3 is, in the first embodiment, a plan view of the car body front;
Fig. 4 is, in the first embodiment, a perspective view of the car body front;
Fig. 5 is, in the first embodiment, a partial enlarged sectional developed view of Fig. 2;
Fig. 6 is, in the first embodiment, a perspective developed view of the right-hand side of the car body front;
Fig. 7 is, in the first embodiment, a partial enlarged cutaway view of Fig. 1;
Fig. 8 is, in a second embodiment, a view corresponding to Fig. 1;
Fig. 9 is, in the second embodiment, a view corresponding to Fig. 4;
Fig. 10 is, in the second embodiment, a view corresponding to Fig. 2; and
Fig. 11 is, in the second embodiment, a view corresponding to Fig. 3.

### First Embodiment

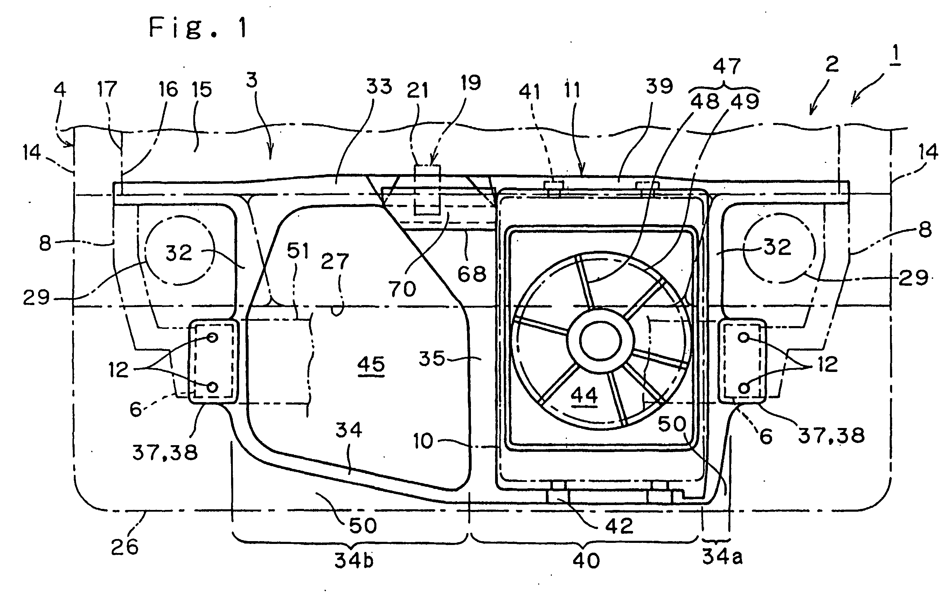

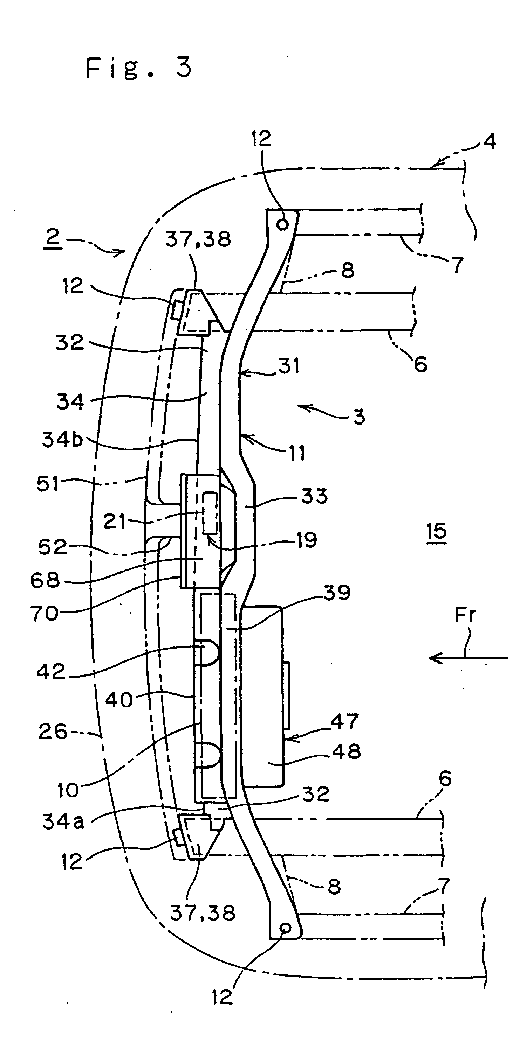

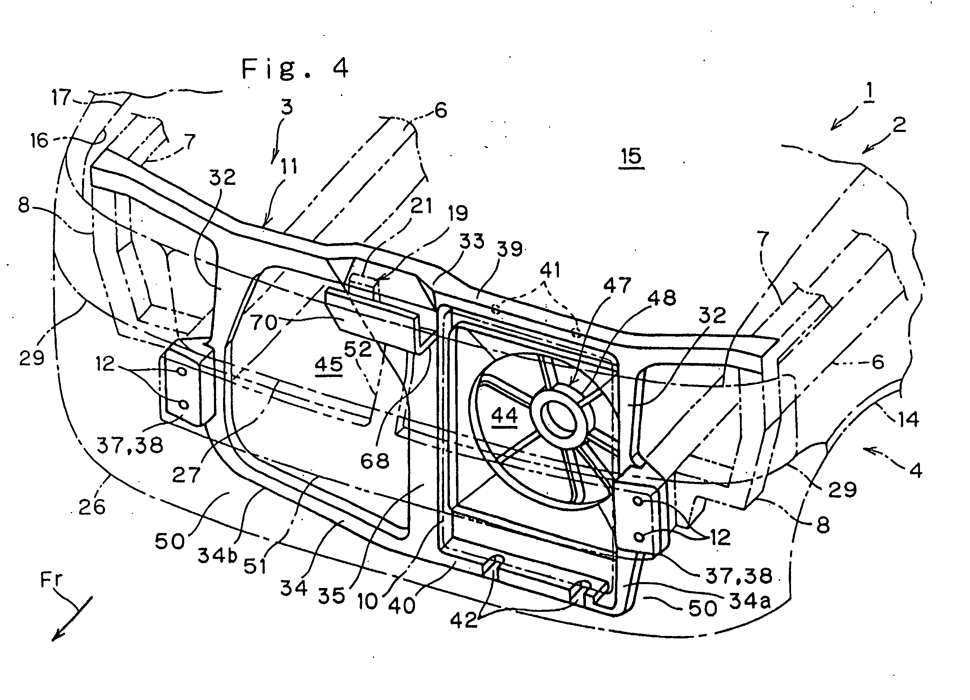

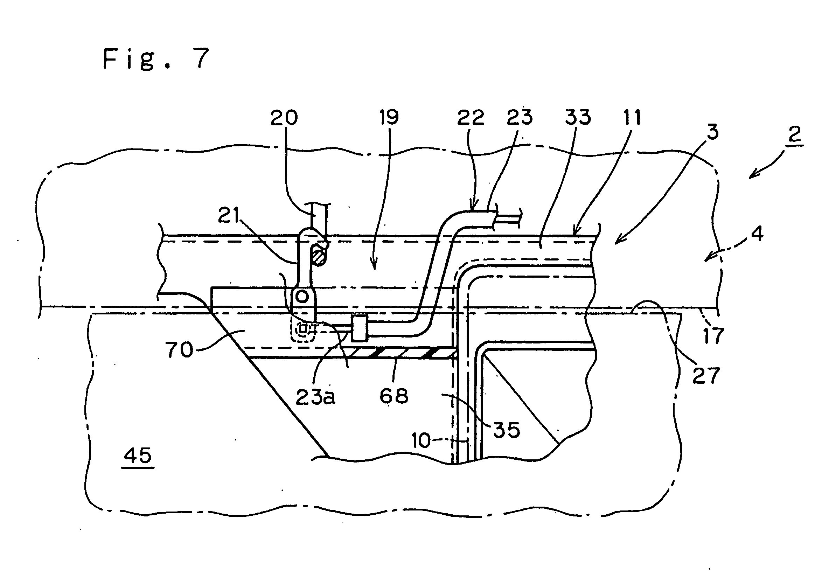

Figs. 1 through 7 show a first embodiment.

In Figs. 1 through 4, the numeral 1 denotes an automobile and the arrow Fr indicates the forward direction of this automobile 1, it being understood that the right and left mentioned hereinafter refers to "widthwise" of the car body 2 of the automobile 1 viewed in said forward direction.

Said car body 2 comprises a car body frame 3 supported on the travel road surface through wheels and so on, and a car body main body 4 of sheet metal supported on said car body frame 3.

Said car body frame 3 further comprises a pair of right and left side members 6, 6 extending lengthwise of the car body 2 and each having its front end designed as a free end projecting forward, an unillustrated cross member extending "widthwise" for joining these side members 6, 6, a pair of upper side members 7, 7 positioned outwardly and upwardly of said side members 6, 6 and extending lengthwise of the car body 2 and each having its front end designed as a free end projecting forward, a pair of right and left joining members 8, 8 for joining the front portions of said side member 6 and upper side member 7 in the sides of said car body frame 3, and a radiator support 11 constituting the front end of said car body frame 3, supported on both sides by the front ends of the two side members 6 and two upper side members 7, and supporting the radiator 10. The radiator 10 is in the form of an assembly consisting of the radiator main body and a condenser.

The side member 6, upper side member 7 and joining member 8 are made of sheet metal and firmly joined by welding. The radiator support 11 is made of resin; in particular it is formed by combining resin and metal. The radiator support 11 is removably joined to the front ends of the two side members 6 and two upper side members 7 by fasteners 12; thus, it is supported by the two side members 6 and two upper members 7.

The car body main body 4 comprises a pair of right and left front fenders 14, 14 covering the side member 6 and upper side member 7 from outside and supported by the upper side member 7 through fasteners, and a space 15, which is an engine room, formed between the right and left front fenders 14, 14 for storing an engine which is a driving source of the automobile 1.

Defined between the upper end edges of said right and left front fenders 14, 14 is an opening 16 for opening said space 15 upwardly of the car body main body 4. The car body main body 4 is provided with a hood 17 capable of opening and closing the opening 16 from above. This hood 17 is pivotally connected at its rear end to the car body frame 3 so that the front end of the hood 7 is upwardly and downwardly turnable.

A hood locking device 19 is provided which, when the hood 17 is turned downward to completely close the opening 16, releasably locks the front end of said hood 17 to the upper end of the radiator support 11 constituting the front upper end of the car body frame 3.

The hood locking device 19 comprises a striker 20 projecting downward from the lower surface of the front end of the hood 17, a locking mechanism 21 which releasably locks the striker 20 to the car body frame 3 when the hood 17 turns downward to completely close the opening 16, and an unlocking element 22 for receiving an operating force from outside and transmitting it to the locking mechanism 21 to make it possible to release the locking mechanism 21 from its locked state. The locking mechanism 21 is disposed adjacent the front of the upper end of the radiator support 11 and supported by the upper end thereof.

The unlocking element 22 comprises an illustrated operating lever installed in the car interior in the car body main body 4, and an unlocking cable 23 operatively connecting said operating lever to said locking mechanism 21. When said operating lever is operated by an operating force applied from outside, this operating force is transmitted to said locking mechanism 21 through said unlocking cable 23, causing the locking mechanism 21 to perform unlocking operation. Then, the locking effect of the locking mechanism 21 on said striker 20 is removed, allowing said hood 17 to turn upward.

Said car body main body 4 comprises a bumper 26 covering the lower portion of said radiator support 11 from the front, and a grill 27 positioned below the front end of said hood 17 and above said bumper 26 and covering the upper portion of said radiator support 11 from the front. The bumper 26 and grill 27 are made of resin; in particular, they are formed by combining resin and metal and are fastened to and supported by said radiator support 11 through unillustrated fasteners. Further, said grill 27 covers, from the front lower region, at least in part, said locking mechanism 21 and said portion 23a of said unlocking cable 23 in the vicinity of said locking mechanism 21.

The "widthwise" central portions of said bumper 26 and grill 27 are formed with vent holes 28 passing through the bumper 26 and grill 27 in the front-back direction. These vent holes 28 extend widthwise, looking at the front of the car body 2, and are formed in a plurality of vertically spaced places . Further, said locking mechanism 21, the portion 23a of said unlocking cable 23 and the "widthwise" substantially central portions of said vent holes 28 are positioned in the same "widthwise" place.

Head lamps 29 are installed above the right and left sides of said bumper 26 and at the outer sides of said grill 27, these head lamps 29 being supported by the sides of the radiator support 11.

The radiator support 11 comprises a pair of right and left support side members 32, 32 constituting the "widthwise" sides in this radiator support 11 and vertically extending, an upper cross member 33 "widthwise" extending to join the upper ends of said support side members 32, a lower cross member 34 "widthwise" extending to join the lower ends of said support side members 32, and a center member 35 for joining the respective "widthwise" substantially centers of said upper and lower cross members 33 and 34.

Said support side member 32, upper cross member 33, lower cross member 34, and center member 35 are integrally molded as by injection molding. Said upper cross member 33 constitutes the upper end of said radiator support 11, while said lower cross member 34 constitutes the lower end of said radiator support 11.

The lengthwise (vertical) intermediate portion 37 of said support side member 32 is formed with a support portion 38 for supporting the intermediate portion 37 on the front end of the side member 6 by fasteners 12. Further, said radiator 10 is removably supported at the upper and lower ends thereof on the "widthwise" intermediate portions 39 and 40 of the upper and lower cross members 33 and 34 by support elements 41 and 42. Further, said locking mechanism 21 releasably locks the front end of said hood 17 to the intermediate portion 39 of said upper cross member 33 through said striker 20.

Said radiator support 11 is provided with a pair of right and left spaces 44 and 45 surrounded by said support member 32, upper cross member 33, lower cross member 34, and center member 35. One (left) space 44 of these spaces 44 and 45 passes through said radiator support 11 forward and backward and said radiator 10 is received in said space 44. The other (right) space 45 passes through said radiator support 11 simply forward and backward.

A wind producing means 47 is positioned in the vicinity of the rear of said radiator 10 for accelerating the flow of the traveling wind passing through this radiator 10. This wind producing means 47 comprises a bracket 48 of resin positioned in the vicinity of the rear of said one space 44 in said radiator support 11 and integrally molded with said radiator support 11, and an electrically driven fan 49 positioned in the vicinity of the rear of said space 44 and supported by said bracket 48.

A bumper reinforcing member 51 of sheet metal is disposed in the vicinity of the front of said radiator support 11, "widthwise" extends, and is joined at its ends to the support portions 38 by fasteners 12. A hood lock support 52 projects upward from the lengthwise intermediate portion of said bumper reinforcing member 51 and connected at its projecting portion to the intermediate portion 39 of said upper cross member 33.

Said bumper reinforcing member 51 and hood lock support 52 are joined to said bumper 26 and said bumper 26 is sufficiently reinforced by the 51 and 52. For this reason, the bumper 26 is improved in strength and rigidity and is firmly supported by said radiator support 11.

In said arrangement, the portions 34a and 34b of said lower cross member 34 between the intermediate portion 37 of the support side member 32 and the intermediate portion 40 of the lower cross member 34, as seen "widthwise," are so formed that they are inclined gradually obliquely upward as the outer side of the lower cross member 34 is approached from the intermediate portion 40 thereof.

For this reason, as compared with said first conventional technique in which said radiator support 11 is simply in the form of a rectangle elongated "widthwise,"looking at the front of the car body 2 (Fig. 1), the outside dimension of said radiator support 11 is reduced by an amount corresponding to the portions 34a and 34b of the lower cross member 34 being obliquely upwardly inclined as described above; thus, this radiator support 11 can be reduced in weight.

Further, in the case where the intermediate portion 37 of said support side member 32 is supported on the front end of said side member 6, as described above, the portions 34a and 34b of the lower cross member 34 are so formed that they are inclined gradually obliquely upward as the outer side of the lower cross member 34 is approached from the intermediate portion 40 thereof, that is, as the intermediate portion 37 of the support side member 32 is approached.

For this reason, as compared with said first conventional technique in which said radiator support 11 is simply in the form of a rectangle elongated "widthwise," looking at the front of the car body 2 (Fig. 1), a larger space 50 can be obtained around the lower region of the intermediate portion 37 of the support side member 32 by an amount corresponding to the portions 34a and 34b of the lower cross member 34 being obliquely upwardly inclined toward the intermediate portion 37 of the support side member 32.

Thus, in fastening the intermediate portion 37 of the support side member 32 to the front end of the side member 6 by fasteners 12 to support the radiator support 11, said space 50 can be utilized as a working space. This, coupled with the fact that the radiator support 11 can be reduced in weight, as described above, facilitates the operation of assembling the radiator support 11 to the front end of the side member 6.

Further, the inclination of the portions 34a and 34b of the lower cross member 34, as described above, results in the intermediate portion 37 of the support side member 32 supported on the front end of the side member 6 being more directly connected to the intermediate portion 40 of the lower cross member 34 supporting the lower end of the radiator 10 by the portions 34a and 34b of the lower cross member 34.

Thus, said radiator 10, which is a heavy object, is supported more firmly by said side members 6 through said radiator support 11, a fact which is useful from the standpoint of the strength with which the radiator 10 is supported.

Further, as described above, the radiator support 11 is made of resin and said right and left support side members 32, 32, upper and lower cross members 33 and 34, and center member 35 are integrally molded.

For this reason, the number of parts of the radiator support 11 is greatly reduced as compared with the case of individually molding the constituent parts 32 - 35 of said radiator support 11.

Thus, the arrangement of the radiator support 11 is simplified, and correspondingly thereto, the operation of assembling the radiator support 11 to the front end of each said side member 6 is further facilitated.

In addition, the above is based on the illustrated example, but only one of the portions 34a and 34b of the lower cross member 34 may be inclined.

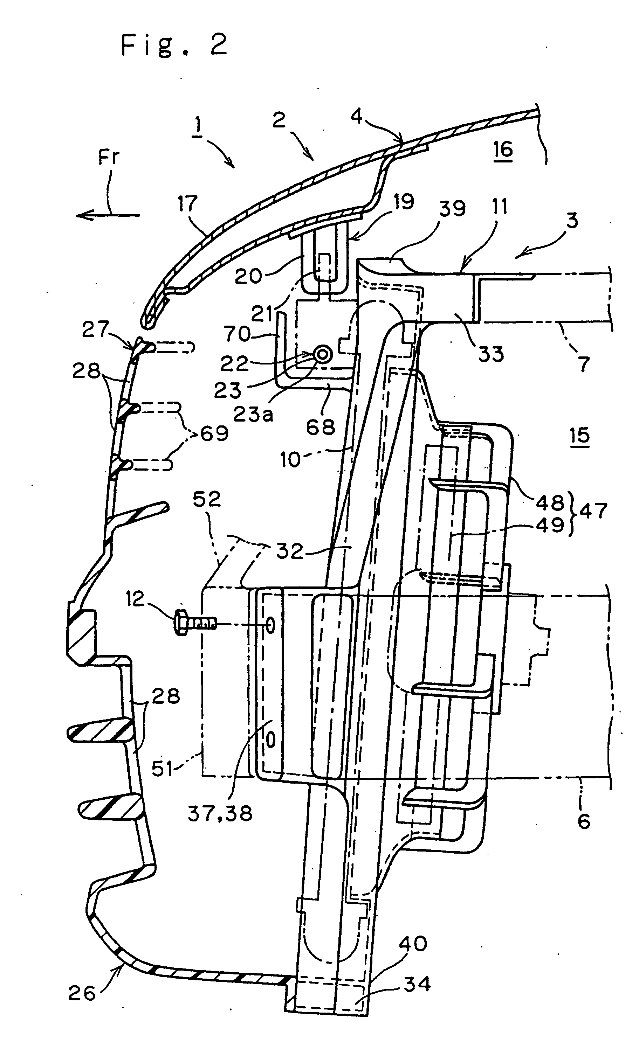

Particularly in Figs. 2, 5 and 6, the radiator support 11 will be described in more detail.

Each said support side member 32 comprises a base plate 53 constituting the front surface thereof, and a pair of right and left side flanges 54, 54 rearwardly integrally projecting from the "widthwise" end edges of the base plate 53, wherein looking at the car body 2 from above, any cross section of each said support side member 32 is in the form of a groove which opens rearward.

Each of the upper and lower cross members 33 and 34 comprises a base plate 56 constituting the front surface thereof, and a pair of upper and lower flanges 57 and 58 rearwardly integrally projecting from the upper and lower end edges of said base plate 56, wherein looking at the side of the car body 2, any cross section of each of the upper and lower cross members 33 and 34 is in the form of a groove which opens rearward.

Looking at the front of the car body 2, any cross section of the side member 6 is in the form of a vertically extending rectangle, and the upper surface of the front end of the side member 6 substantially horizontally extends flatwise.

Each said support portion 38 comprises a pair of right and left side plates 60 and 61 holding the front end of said side member 6 from right and left, upper and lower plates 62 and 63 for vertically holding the front end of said side member 6, and a front surface plate 65 completely closing the front end opening in the internal space 64 surrounded by the plates 60 - 63.

The plates 60 - 63, and 65 are integrally molded together with the support side member 32, and each said support portion 38 is in the form of a rectangular box which opens rearward. Each of the support portions 38 for the radiator support 11 is removably fitted on the front end of each said side member 6 by rearwardly moving said radiator support 11 from the front of the front end of each said side member 6.

It is arranged that when each support portion 38 is fitted on the front end of each said side member 6, the inner surface of each support portion 38 contacts the outer surface of the front end of each said side member 6 substantially throughout. In this fitted state, the front surface plate 65 of each support portion 38 is fastened to the front end of each said side member 6 by said fasteners 12; thus, the radiator support 11 is supported by the front ends of both side members 6.

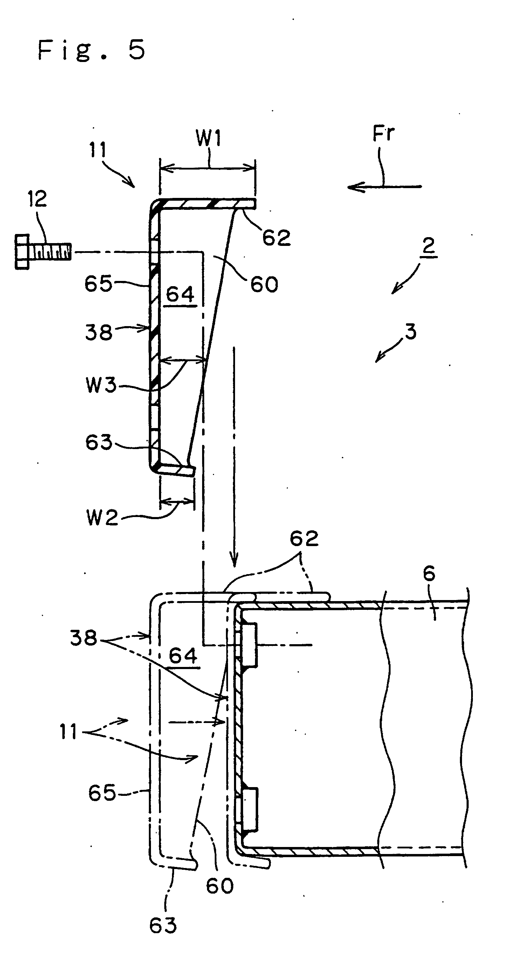

Particularly in Fig. 5, the rear end of said upper plate 62 is positioned more rearward than the rear end of said lower plate 63 in each "widthwise" portion of each said support portion 38.

When it is desired to perform the operation of assembling the radiator support 11 to the front ends of said side members 6, first, each of the support portions 38 for the radiator support 11 is positioned above the front end of each said side member 6 (solid line in Fig. 5).

Then, said radiator support 11 is lowered (alternate long and short dash line arrow in Fig. 5) until the rear end of the upper plate 62 of each said support portion 38 is placed on the upper surface of the front end of each said side member 6 (alternate long and short dash line in Fig. 5). Thereupon, vertical positioning of the rear end opening in the internal space 64 of each said support portion 38 is effected with respect to the front end of each said side member 6.

Then, the upper plate 62 of each said support portion 38 is "widthwise" slid on the upper surface of the front end of each said side member 6, "widthwise" positioning the rear end opening in the internal space 64 of each said support portion 38 with respect to the front end of each said side member 6.

Then, the upper plate 62 of each said support portion 38 is slid on the upper surface of the front end of each said side member 6 to rearwardly move said radiator support 11 (alternate long and two short dashes line arrow in Fig. 5) to fit each said support portion 38 on the front end of each said side member 6. Further, the front surface plate 65 of each said support portion 38 is abutted against the front end surface of each said side member 6 (alternate long and two short dashes line in Fig. 5). In this fitted state, the front surface plate 65 of each said support portion 38 is joined to the front end of each said side member 6 by fasteners 12, thereby completing the assembling operation.

In this case, the rear end of the upper plate 62, as described above, is positioned more rearward than the rear end of the lower plate 63 positioned below the upper plate 62.

For this reason, in said assembling operation, when the radiator support 11 is lowered as described above until the rear end of the upper plate 62 of each said support portion 38 is placed on the upper surface of the front end of each said side member 6, it is possible to prevent the rear end of said lower plate 63 from contacting the front end of said side member 6. Thus, placement of the rear end of said upper plate 62 on the upper surface of the front end of said side member 6 can be easily effected.

Further, if the rear end of the upper plate 62 of each support portion 38 is placed on the upper surface of the front end of each said side member 6, as described above, temporary placement of said radiator support 11 can be effected and vertical positioning of the rear end opening in the internal space 64 of each said support portion 38 on the front end of each said side member 6 can be automatically effected.

Thus, as compared with the conventional technique in which the positioning of each support portion 38 with respect to the front end of each said side member 6 is difficult, this positioning can be easily effected and said assembling operation is correspondingly facilitated.

Further, in the above case, the lower surface of the upper plate 62 of each support portion 38 is molded substantially horizontal.

For this reason, when the upper plate 62 of each said support portion 38 is temporarily placed on the upper surface of the front end of each said side member 6, each said support portion 38 is prevented from accidentally slipping off the upper surface of the front end of each said side member 6, and said assembling operation is correspondingly further facilitated.

Further, the upper and lower plates 62 and 63 are so molded that the width dimension W2 of said lower plate 63 is smaller than the width dimension W1 of said upper plate 62 in the longitudinal direction of the car body 2 in each "widthwise" portion of said support portion 38.

In this case, since said support portion 38 is in the form of a box which opens rearward, if water enters the internal space 64 of the support portion 38, it tends to stay there. However, since the width dimension W2 of the lower plate 63, which is the bottom plate of said support portion 38, is made smaller, said water is correspondingly prevented from staying.

Thus, the front end of the side member 6 on which said support portion 38 is fitted is prevented from rusting easily.

In the above case, the upper surface of the lower plate 63 is a rearwardly downwardly inclined surface, and the depression angle of the rearwardly extending upper surface of the lower plate 63 is made greater than the depression angle (approximately 0° ) of the lower surface of said upper plate 62.

For this reason, water staying in the internal space 64 of said support portion 38 is prevented more reliably. Thus, the front end of the side member 6 is more reliably prevented from rusting.

Further, the upper surface of the lower plate 63 is rearwardly downwardly inclined, as described above, and looking at the side of the car body 2, the vertical dimension of said internal space 64 gradually increases toward the rear.

For this reason, during the assembling operation described above, the fitting of the internal space 64 of said support portion 38 on the front end of said side member 6 can be more easily effected, so that said assembling operation can be correspondingly further facilitated.

Of the two side plates 60 and 61 of each said support portion 38, the side plate 60 on the outer side of the car body 2 has a width dimension W3 lengthwise of the car body 2 gradually decreasing toward the bottom.

For this reason, the width dimension W2 of the lower plate 63 is smaller than the width dimension W1 of the upper plate 62 as described above and these plates differ in strength, but the strength of said side plate 60 between these upper and lower plates 62 and 63 gradually decreases from said upper plate 62 to said lower plate 63.

Thus, occurrence of stress concentration in part of said support portion 38 is prevented, so that, even when measures are taken to prevent the front end of the side member 6 from rusting, as described above, the strength of the car body frame 3 is satisfactorily maintained.

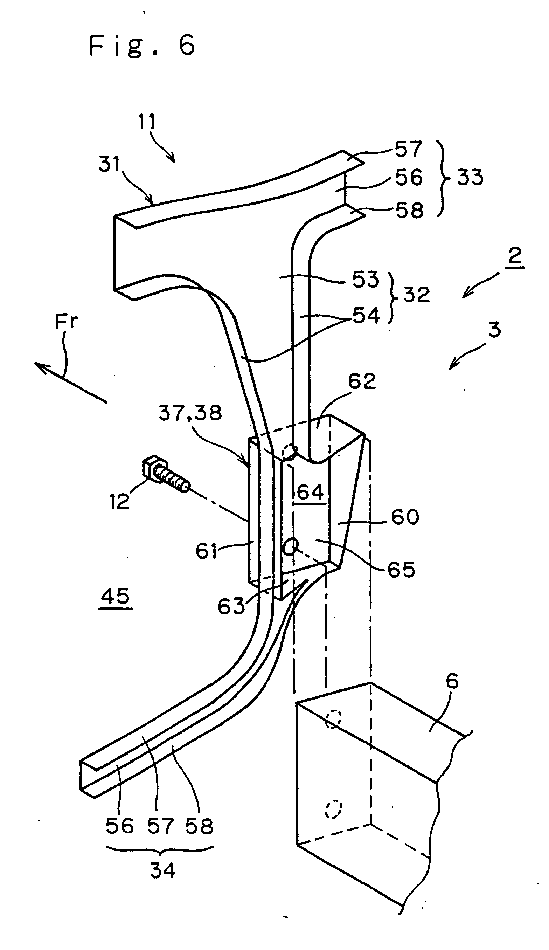

Particularly in Fig. 6, of both side flanges 54, 54 of said support side member 32, the side flange 54 positioned on the outer side of the car body 2, the side plate 60 of said support portion 38, and the lower flange 58 of said lower cross member 34 are integrally molded into a single strip as a whole. Further, the side flange 54 positioned on the inner side of said support side member 32, the side plate 61 of said support portion 38, and the upper flange 57 of said lower cross member 34 are integrally molded into a single strip as a whole. The rear end edge of each said strip continuously smoothly extends in such a manner that no difference in level is produced lengthwise of the car body 2.

For this reason, a sudden change in strength in each portion of said radiator support 11 is prevented and so is the occurrence of stress concentration; thus, the strength of the car body frame 3 is satisfactorily maintained.

In addition, the above is based on the illustrated example, but the width dimension W3 of the side plates 60 and 61 of said support portion 38 may be gradually reduced toward the bottom.

In Figs. 1 - 4, and 7, a cover body 68 is provided which is supported by the car body frame 3 and substantially completely covers said locking mechanism 21 and the portion 23a of said unlocking cable 23 from below, said cover body 68 being covered from the front by said grill 27.

For this reason, even if an outsider inserts his finger into the vent hole 28 in the grill 27 from the front of the car body 2, said cover body 68 prevents this finger from reaching the locking mechanism 21 or the portion 23a of the unlocking cable 23.

Thus, tampering with the locking mechanism 21 or the portion 23a of the unlocking cable 23 by outsiders is prevented; for this reason, unlocking of said locking mechanism 21 is prevented and so is theft or mischief.

In the conventional technique, ribs 69 are integrally molded in the back surface of the grill 27, so that shrinkage occurs in the surface of the grill 27 corresponding to the ribs 69, presenting a problem from an aesthetic point of view.

However, since the cover body 68 is supported by the car body frame 3, shrinkage is preventing from occurring in the surface of the grill 27. Further, said cover body 68 is covered by the grill 27 from the front and cannot be easily seen as a matter of external appearance of the car body 2.

Thus, even when tampering with the locking mechanism 21 or the portion 23a of the unlocking cable 23 by outsiders is prevented, as described above, the external appearance of the car body 2 is satisfactorily maintained.

Further, it sometimes occurs that during the travel of the automobile 1, a lot of water drops splashed from the travel road surface are flown obliquely rearwardly upward, passing through the vent holes 28 in said grill 27 from the front of the car body 2 to the locking mechanism 21 or to the portion 23a of the unlocking cable 23. However, said cover body 68, which covers said locking mechanism 21, etc., from below, prevents said water drops from reaching the locking mechanism 21, etc.

Thus, contamination of the locking mechanism 21 or the portion 23a of the unlocking cable 23 by said water drops is prevented and smooth operation of the locking mechanism 21 is ensured.

Further, as described above, the car body frame 3 is provided with the radiator support 11 of resin constituting the front end thereof, the front upper end of the car body frame 3 is constituted by the upper cross member 33 at the upper end of the radiator support 11, and the upper cross member 33 is integrally molded with said cover body 68.

For this reason, even when measures are taken to prevent tempering with the locking mechanism 21 or the portion 23a of the unlocking cable 23 by outsiders, an increase in the number of parts of the hood locking device 19 is suppressed; thus, prevention of tampering by outsiders can be achieved by a simple arrangement.

Further, since the upper cross member 33 is integrally molded with said cover body 68, as described above, the cover body 68 acts as a reinforcing member for the upper cross member 33. The upper cross member 33 is a "widthwise" elongated member for which it is difficult to secure strength and rigidity; however, said cover body 68 improves the strength and rigidity of the upper cross member 33.

Thus, when the front end of the hood 17 is locked to the upper cross member 33 through said locking mechanism 21, support of the front end of the hood 17 with respect to the upper cross member 33 is firmly effected by the simple arrangement of utilizing said cover body 68.

Further, another cover body 70 is provided which integrally projects upward from the front end (projecting end) of said cover body 68 to substantially completely cover the locking mechanism 21 and the portion 23a of the unlocking cable 23 from the front.

For this reason, according to said another cover body 70, prevention of tampering by outsiders with said locking mechanism 21, etc., and prevention of contamination of said locking mechanism 21, etc., are more reliably achieved.

In addition, the above is based on the illustrated example, but said cover body 68 and another cover body 70 may be molded substantially completely "widthwise" of the upper cross member 33 of said car body frame 3. Further, said another cover body 70 may be dispensed with.

### Second Embodiment

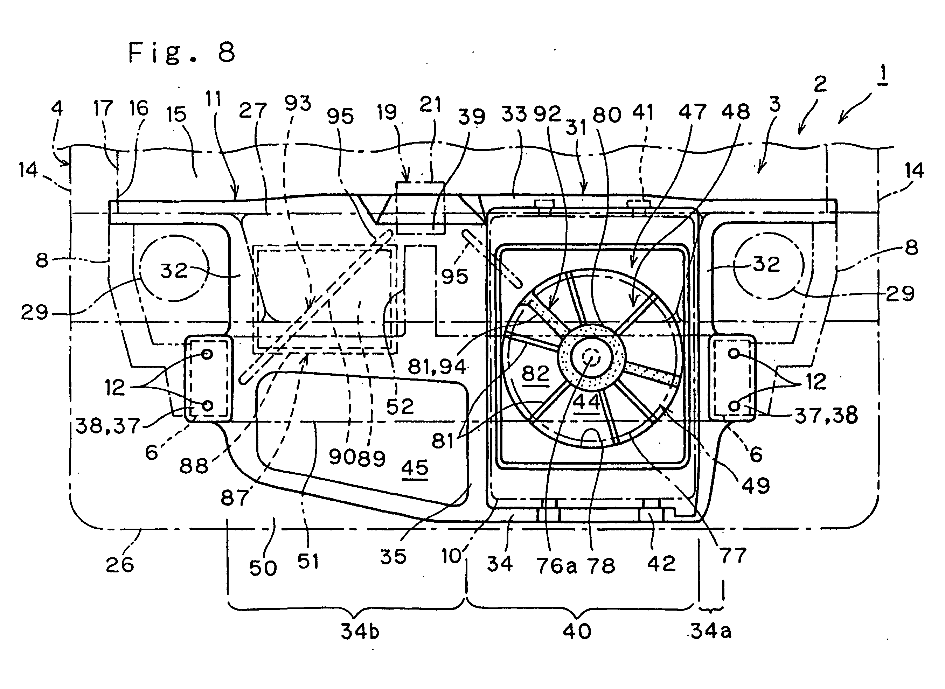

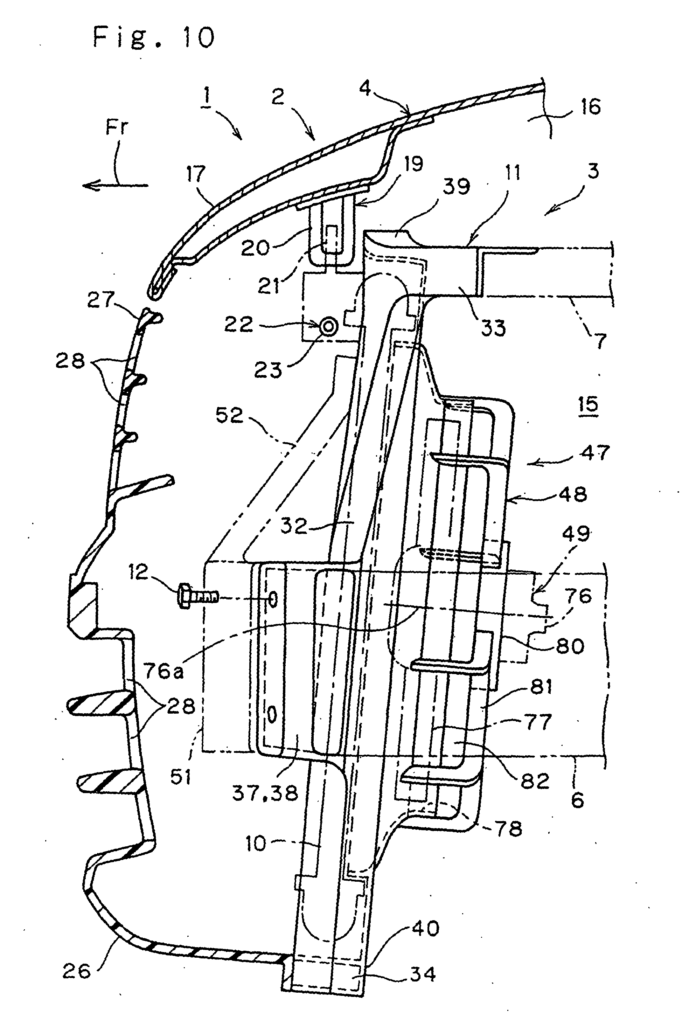

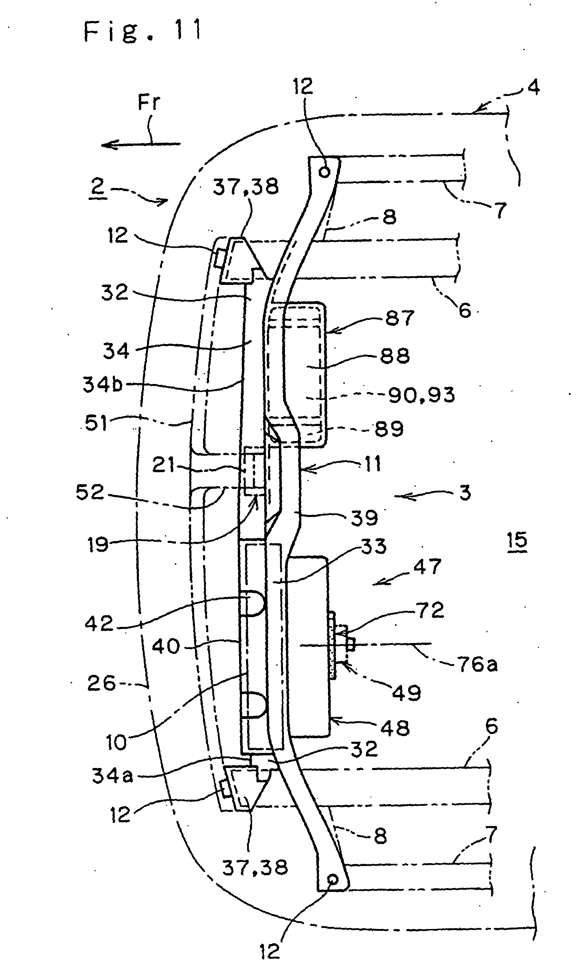

Figs. 8 - 11 show a second embodiment.

In addition, this second embodiment has many points about arrangement and working in common with the first embodiment. Accordingly, differing points alone will be described while omitting a repetitive description of the common points with common reference characters added to the drawings.

In Figs. 8 - 11, said fan 49 comprises an electric motor 76 serving as a driving source, wind producing vanes 77 supported by the output shaft of the electric motor 76 on its axis 51a and driven for rotation by said electric motor 76 in an axial flow manner, and a cylindrical fan shroud 78 of resin integrally molded on said radiator support 11 and positioned substantially on the axis 51a to cover the outer peripheral surface of the rotation locus of the vanes 77 radially from outside.

The bracket 48 comprises an annular bracket main body 80 positioned substantially on said axis 51a and supporting said electric motor 76 as by fasteners, and a plurality of motor stays 81 radially disposed around said axis 51a serving as a center and integrally joining the fan shroud 78 and bracket main body 80. Defined around the axis 51a and between adjoining motor stays 81 and 56 is a space 82 for passage of the travel wind and the wind produced by said fan 49, said space 82 communicating with said space 44 in the front-back direction.

The rear surface of the radiator support 11 is integrally molded with a vessel 87 of resin. The vessel 87 is capable of storing vehicle components, such as cooling water for the radiator 10, washer liquid, and air cleaner. The vessel 87 is in the form of a rectangular parallelepiped comprising an outer flat shell plate 88 constituting each face (six faces), and a partition plate 90 partitioning the internal space 89 of the vessel 87 and integrally molded on each said outer shell plate 88.

The front surface plate in the outer shell plates 88 of the vessel 87 closes the top of the space 45 surrounded by the support side member 32, upper cross member 33 and lower cross member 34, in the other side (right-hand side) of the radiator support 11.

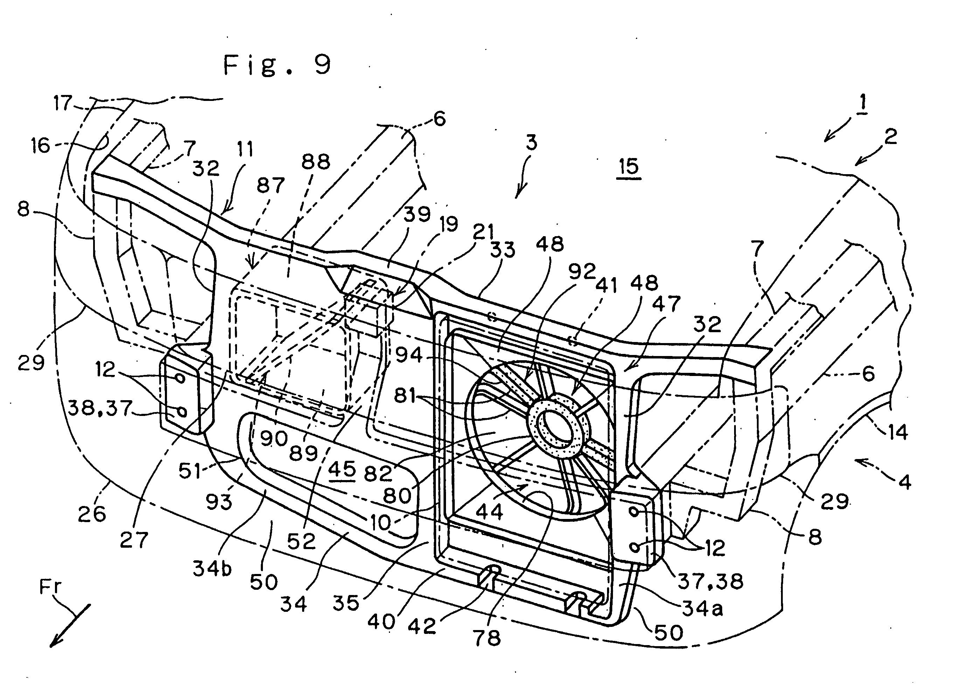

In Figs. 8 and 9, looking at the front of the car body 2 (Fig. 8), the portion extending from the intermediate portion 39 of the upper end in the radiator support 11 to the intermediate lengthwise portion 37 of each support side member 32 which is each side is integrally molded with a pair of right and left reinforcing members 92 and 93. These reinforcing members 92 and 93 extend from the intermediate portion 39 substantially linearly obliquely downward toward each said support side member 32.

In this case, when the front end of the hood 17 is locked to the intermediate portion 39 of the upper end of the radiator support 11 by the locking mechanism 21 of the hood locking device 19, a large external force is applied to the intermediate portion 39 of the upper end of the radiator support 11 through the hood 17 due to the vibration of the car body 2, or the like, during traveling. According to the above arrangement, however, said external force is firmly supported by each said side member 6 through each said reinforcing member 92, 93 and each side of the radiator support 11.

Thus, the locking strength of the locking mechanism 21 of the front end of the hood 17 on the upper end of the radiator support 11 is further improved.

Further, the reinforcing member 92 and 93 are integrally molded on the radiator support 11, as described above, so that the improvement in the locking strength described above is achieved by a simple arrangement while preventing an increase in the number of parts.

In the above case, the pair of right and left reinforcing members 92 and 93, while gradually downwardly inclining as they extend from the intermediate portion 39 of the upper end of the radiator support 11 respectively toward the right and left outer sides "widthwise" of the car body 2, extend toward the right and left sides of the radiator support 11. That is, said two reinforcing members 92 and 93 are shaped to form two side of a triangle, and said bumper reinforcing member 51 is mounted on said sides of the radiator support 11.

For this reason, the intermediate portion of the upper end of the radiator support 11 is located substantially on the top of a triangular reinforcing frame body (51, 92, 93) defined by the bumper reinforcing member 51 and two reinforcing members 92 and 93.

Thus, when an external force is applied to the intermediate portion 39 of the upper end of the radiator support 11, the external force is firmly supported by said two reinforcing members 92 and 93 irrespective of the direction of the external force. For this reason, the locking strength is further reliably improved.

A portion 94 (having a pear-skin pattern, in Figs. 8 and 9) is composed of the bracket main body 80 of the bracket 48 for the wind producing means 47, and some of the motor stays 81. And, a portion 94 of said bracket 48 constitutes the reinforcing member 92.

For this reason, the component part of the wind producing means 47 is utilized for the reinforcing member 92 supporting said external force, so that a corresponding further improvement in the locking strength is achieved by a simple arrangement.

The reinforcing member 93 is constituted by the partitioning plate 90 of the vessel 87.

For this reason, since the component part of the vessel 87 is utilized for the reinforcing member 93 supporting said external force, a corresponding further improvement in said locking strength is achieved by a simple arrangement.

As shown in alternate long and short dash line in Fig. 8, the reinforcing members 92 and 93 may be constituted by a rib 95 integrally molded on the front surface of the radiator support 11. Further, the rib 95 may be provided in addition to the component parts of the wind producing means 47 and to the partition plate 90, or may be provided in substitution therefor.

With the arrangement thus made, the rib 95 can be freely set irrespective of the shape of the vessel 87 or bracket 48 of the existing wind producing means 47, so that the locking strength is correspondingly more effectively improved.

In addition, the above is based on the illustrated example, but the locking mechanism 21 and the projecting portion of the hood locking support 52 may be fastened together to the intermediate portion 39 of the upper cross member 33 by fasteners. Further, the whole of the space 45 may be closed by the front surface plate in the outer shell plates 88 of the vessel 87. Further, instead of the partition plate 90 of the vessel 87, any one of the outer shell plates 88 of the vessel 87 may be used as the reinforcing member 93. Further, the vessel 87 is not limited in shape to a rectangular parallelepiped; it may be in the form of a cube or the like.

Further, the present invention may be accomplished by suitably combining the individual component members described above.

## Claims

1. A car body front structure for automobiles, comprising a pair of right and left side members (6.6) extending lengthwise of a car body (2) , and a radiator support (11) supported at each side by the front ends of these two side members (6, 6), said radiator support (11) comprising a pair of right and left support side members (32, 32) constituting the widthwise sides of the car body (2) and vertically extending, an upper cross member (33) extending in said widthwise direction to join the upper ends of said support side members (32, 32), and a lower cross member (34) extending in said widthwise direction to join the lower ends of said support side members (32, 32), said support side members (32, 32) being supported at their lengthwise intermediate portions (37, 37) by the front ends of said side members (6, 6), the widthwise intermediate portion (40) of said lower cross member (34) supporting the lower end of said radiator (10), said car body front structure for automobiles being **characterized in that**
the portions (34a, 34b) of said lower cross member (34) between the intermediate portions (37, 37) of said support side members (32, 32) and the intermediate portion (40) of said lower cross member (34) are so molded that in said widthwise direction, they are obliquely upwardly inclined as they extend from the intermediate portion (40) of the lower cross member (34) to the outer sides, where said lower cross member joins the lower ends of said support side members (32,32).

2. A car body front structure for automobiles as set forth in Claim 1, **characterized in that** said radiator support (11) is made of resin and said pair of right and left support side members (32, 32) and the upper and lower cross members (33, 34) are respectively integrally molded.

3. A car body front structure for automobiles as set forth in Claim 1 or 2, wherein said radiator support (11) includes a pair of right and left support portions (38, 38) formed on said support side members (32) and supported by the front ends of said side members (6), each support portion (38) comprising a pair of right and left side plates (60, 61) holding the front end of said side member (6) from right and left, upper and lower plates (62, 63) holding the front end of said side member (6) from above and below, and a front surface plate (65) closing the front end opening in an internal space (64) surrounded by these plates (60 - 63), thus forming a box shape which opens to the rear, each said support portion (38) being fitted on the front end of each said side member (6) from the front, said car body front structure for automobiles being further **characterized in that**
the rear end of said upper plate (62) is positioned more rearward than the rear end of said lower plate (63).

4. A car body front structure for automobiles as set forth in Claim 3, **characterized in that**
said upper and lower plates (62, 63) are so molded that the width dimension (W2) of said lower plate (63) is smaller than the width dimension (W1) of said upper plate (62) lengthwise of the car body (2), and
said side plates (60, 61) are so molded that the width dimension (W3) lengthwise of the car body (2) gradually decreases as the bottom is reached.

5. A car body front structure for automobiles as set forth in any of Claims 1 through 4, comprising a car body main body (4) supported by said side members (6, 6) and having a space (15) therein, a hood (17) capable of opening and closing the upper end opening (16) in said space (15) from above, a locking mechanism (21) disposed in the vicinity of the front of the front upper end of said radiator support (11) to releasably lock the front end of said hood (17) to said radiator support (11), an unlocking cable (23) extending from the locking mechanism (21) to transmit an operating force fed in from outside to said locking mechanism (21) to make it possible to release the locking mechanism (21) from the locked state, and a grill (27) positioned below the front end of said hood (17) to cover, from the front, said locking mechanism (21) and the portion (23a) of said unlocking cable (23) in the vicinity of said locking mechanism (21), said car body front structure for automobiles being further **characterized by** including
a cover body (68) supported by said radiator support (11) to cover said locking mechanism (21) and the portion (23a) of said unlocking cable (23) from below.

6. A car body front structure for automobiles as set forth in any of Claims 1 through 4, **characterized by** comprising a car body main body (4) supported by said side members (6, 6) and having a space (15) therein, a hood (17) capable of opening and closing the upper end opening (16) in said space (15) from above, a locking mechanism (21) releasably locking the front end of said hood (17) to the intermediate portion (39) of the upper end of said radiator support (11) widthwise of the car body (2), and reinforcing members (92, 93) integrally molded on a portion extending from said intermediate portion (39) of the upper end of the radiator support (11) to the sides to extend obliquely downward from said intermediate portion (39) to the sides.

7. A car body front structure for automobiles as set forth in Claims 6, including a wind producing means (47) for accelerating the flow of travel wind passing through a radiator (10) supported by the radiator support (11), said wind producing means (47) comprising a bracket (48) integrally molded on said radiator support (11) and a fan (49) supported by said bracket (48), said car body front structure for automobiles being further **characterized in that**
said reinforcing member (92) is constituted by a portion (94) of said bracket (48).

8. A car body front structure for automobiles as set forth in Claims 6 or 7, **characterized in that** said radiator support (11) is integrally molded with a vessel (87) for storing vehicle component parts, and said reinforcing member (93) is constituted by the outer shell plate (88) of said vessel (87) or by partition plate (90) partitioning the internal space (89) of the vessel (87).

9. A car body front structure for automobiles as set forth in any of Claims 6 to 8, **characterized in that** said reinforcing members (92, 93) are constituted by ribs (95) integrally molded on said radiator support (11).

## Patentansprüche

1. Fahrzeugkarosserie-Frontstruktur für Automobile, die folgendes aufweist: ein Paar von rechten und linken Seitenelementen (6, 6), die sich in Längsrichtung einer Fahrzeugkarosserie (2) erstrecken, und einen Kühlerträger (11), der auf jeder Seite durch die vorderen Enden von diesen zwei Seitenelementen (6, 6) getragen wird, wobei der Kühlerträger (11) ein Paar von rechten und linken Träger-Seitenelementen (32, 32) aufweist, die die Seiten in Breitenrichtung der Fahrzeugkarosserie (2) bilden und die sich in vertikaler Richtung erstrecken, ein oberes Querelement (33), das sich in der Breitenrichtung erstreckt, um die oberen Enden der Träger-Seitenelemente (32, 32) zu verbinden, und ein unteres Querelement (34), das sich in der Breitenrichtung erstreckt, um die unteren Enden der Träger-Seitenelemente (32, 32) zu verbinden, wobei die Träger-Seitenelemente (32, 32) an ihren mittleren Teilen in Längsrichtung (37, 37) durch die vorderen Enden der Seiten elemente (6, 6) getragen werden, wobei der mittlere Teil in Breitenrichtung (40) des unteren Querelements (34) das untere Ende des Kühlers (10) trägt, wobei die Fahrzeugkarosserie-Frontstruktur für Automobile **dadurch gekennzeichnet ist, dass**
die Teile (34a, 34b) des unteren Querelements (34) zwischen den mittleren Teilen (37, 37) der Träger-Seitenelemente (32, 32) und des mittleren Teils (40) des unteren Querelements (34) so geformt sind, dass sie in der Breitenrichtung schräg aufwärts geneigt sind, wenn sie sich von dem mittleren Teil (40) des unteren Querelements (34) zu den äußeren Seiten erstrecken, wobei das untere Querelement die unteren Enden der Träger-Seitenelemente (32, 32) verbindet.

2. Fahrzeugkarosserie-Frontstruktur für Automobile nach Anspruch 1, **dadurch gekennzeichnet, dass** der Kühlerträger (11) aus Harz hergestellt ist, und das Paar von rechten und linken Träger-Seitenelementen (32, 32) und die oberen und unteren Querelemente (33, 34) jeweils integriert geformt sind.

3. Fahrzeugkarosserie-Frontstruktur für Automobile nach Anspruch 1 oder 2, wobei der Kühlerträger (11) ein Paar von rechten und linken Trägerteilen (38, 38) enthält, die an den Träger-Seitenelementen (32) ausgebildet sind und die durch die vorderen Enden der Seitenelemente (6) getragen sind, wobei jeder Trägerteil (38) ein Paar von rechten und linken Seitenplatten (60, 61) aufweist, die das vordere Ende des Seitenelements (6) von rechts und links halten, obere und untere Platten (62, 63), die das vordere Ende des Seitenelements (6) von oben und unten halten, und eine vordere Oberflächenplatte (65), die das vordere Ende, das sich in einen Innenraum (64) öffnet, der durch diese Platten (60 - 63) umgeben ist, schließt, um dadurch eine Kastenform zu bilden, die sich nach hinten öffnet, wobei jeder Trägerteil (38) an dem vorderen Ende jedes Seitenelements (6) von der Vorderseite aus angebracht wird, wobei die Fahrzeugkarosserie-Frontstruktur für Automobile weiterhin **dadurch gekennzeichnet ist, dass**
das hintere Ende der oberen Platte (62) mehr nach hinten als das hintere Ende der unteren Platte (63) positioniert ist.

4. Fahrzeugkarosserie-Frontstruktur für Automobile nach Anspruch 3, **dadurch gekennzeichnet, dass**
die oberen und unteren Platten (62, 63) so geformt sind, dass die Breitendimension (W2) der unteren Platte (63) kleiner als die Breitendimension (W1) der oberen Platte (62) in Längsrichtung der Fahrzeugkarosserie (2) ist, und
die Seitenplatten (60, 61) so geformt sind, dass die Breitendimension (W3) in Längsrichtung der Fahrzeugkarosserie (2) nach und nach kleiner wird, wenn der Boden erreicht wird.

5. Fahrzeugkarosserie-Frontstruktur für Automobile nach einem der Ansprüche 1 bis 4, die einen Fahrzeugkarosserie-Hauptkörper (4) aufweist, der durch die Seitenelemente (6, 6) getragen wird und der einen Raum (15) darin hat, eine Haube (17), die die obere Endöffnung (16) in dem Raum (15) von oben öffnen und schließen kann, einen Verriegelungsmechanismus (21), der in der Nähe der Vorderseite des vorderen oberen Endes des Kühlerträgers (11) angeordnet ist, um das vordere Ende der Haube (17) mit dem Kühlerträger (11) lösbar zu verriegeln, ein Entriegelungskabel (23), das sich von dem Verriegelungsmechanismus (21) erstreckt, um eine Betätigungskraft, die von außen zugeführt wird, zu dem Verriegelungsmechanismus (21) zu übertragen, um es möglich zu machen, den Verriegelungsmechanismus (21) aus dem verriegelten Zustand zu lösen, und einen Grill (27), der unter dem vorderen Ende der Haube (17) positioniert ist, um von der Vorderseite aus den Verriegelungsmechanismus (21) und den Teil (23a) des Entriegelungskabels (23) in der Nähe des Verriegelungsmechanismus (21) abzudecken, wobei die Fahrzeugkarosserie-Frontstruktur für Automobile weiterhin **dadurch gekennzeichnet ist, dass** sie folgendes enthält:
einen Abdeckkörper (68), der durch den Kühlerträger (11) getragen wird, um den Verriegelungsmechanismus (21) und den Teil (23a) des Entriegelungskabels (23) von unten abzudecken.

6. Fahrzeugkarosserie-Frontstruktur für Automobile nach einem der Ansprüche 1 bis 4, **dadurch gekennzeichnet, dass** sie folgendes aufweist: einen Fahrzeugkarosserie-Hauptkörper (4), der durch die Seitenelemente (6, 6) getragen wird und der einen Raum (15) darin hat, eine Haube (17), die die obere Endöffnung (16) in dem Raum (15) von oben öffnen und schließen kann, einen Verriegelungsmechanismus (21), der das vordere Ende der Haube (17) mit dem mittleren Teil (39) des oberen Endes des Kühlerträgers (11) in Breitenrichtung der Fahrzeugkarosserie (2) lösbar verriegelt, und Verstärkungselemente (92, 93), die integral an einem Teil geformt sind, der sich von dem mittleren Teil (39) des oberen Endes des Kühlerträgers (11) zu den Seiten erstreckt, um sich von dem mittleren Teil (39) zu den Seiten schräg abwärts zu erstrecken.

7. Fahrzeugkarosserie-Frontstruktur für Automobile nach Anspruch 6, die folgendes enthält: eine Winderzeugungseinrichtung (47) zum Beschleunigen des Stroms eines Fahrwindes, der durch einen Kühler (10) verläuft, der durch den Kühlerträger (11) getragen wird, wobei die Winderzeugungseinrichtung (47) eine Klammer (48) aufweist, die an den Kühlerträger (11) integral geformt ist, um einen Ventilator (49), der durch die Klammer (48) getragen wird, wobei die Fahrzeugkarosserie-Fronstruktur für Automobile weiterhin **dadurch gekennzeichnet ist, dass**
das Verstärkungselement (92) durch einen Teil (94) der Klammer (48) gebildet ist.

8. Fahrzeugkarosserie-Frontstruktur für Automobile nach Anspruch 6 oder 7, **dadurch gekennzeichnet, dass** der Kühlerträger (11) integral mit einem Gefäß (87) zum Lagern von Fahrzeugkomponententeilen geformt ist, und das Verstärkungselement (93) durch die Außenschalenplatte (88) des Gefäßes (87) oder durch eine Trennplatte (90), die den Innenraum (89) des Gefäßes (87) trennt, gebildet ist.

9. Fahrzeugkarosserie-Frontstruktur für Automobile nach einem der Ansprüche 6 bis 8, **dadurch gekennzeichnet, dass** die Verstärkungselemente (92, 93) durch Rippen (95) gebildet sind, die an dem Kühlerträger (11) integral geformt sind.

## Revendications

1. Structure avant de corps de voiture pour automobiles, comprenant une paire d'éléments latéraux droit et gauche (6, 6) s'étendant en longueur d'un corps de voiture (2), et un support de radiateur (11) supporté de chaque côté par les extrémités avant de ces deux éléments latéraux (6, 6), ledit support de radiateur (11) comprenant une paire d'éléments latéraux de support droit et gauche (32, 32) constituant les côtés en largeur du corps de voiture (2) et s'étendant verticalement, un élément transversal supérieur (33) s'étendant dans ladite direction en largeur pour relier les extrémités supérieures desdits éléments latéraux de support (32, 32), et un élément transversal inférieur (34) s'étendant dans ladite direction en largeur pour relier les extrémités inférieures desdits éléments latéraux de support (32, 32), lesdits éléments latéraux de support (32, 32) étant supportés au niveau de leurs portions intermédiaires longitudinales (37, 37) par les extrémités avant desdits éléments latéraux (6, 6), la portion intermédiaire en largeur (40) dudit élément transversal inférieur (34) supportant l'extrémité inférieure dudit radiateur (10), ladite structure avant de corps de voiture pour automobiles étant **caractérisée en ce que** :
les portions (34a, 34b) dudit élément transversal inférieur (34) entre les portions intermédiaires (37, 37) desdits éléments latéraux de support (32, 32) et la portion intermédiaire (40) dudit élément transversal inférieur (34) sont moulées de telle sorte que, dans ladite direction en largeur, elles sont inclinées vers le haut de manière oblique tandis qu'elles s'étendent de la portion intermédiaire (40) de l'élément transversal inférieur (34) jusqu'aux côtés extérieurs, où ledit élément transversal inférieur relie les extrémités inférieures desdits éléments latéraux de support (32, 32).

2. Structure avant de corps de voiture pour automobiles selon la revendication 1, **caractérisée en ce que** ledit support de radiateur (11) est réalisé en résine et ladite paire d'éléments latéraux de support droit et gauche (32, 32) et les éléments transversaux supérieur et inférieur (33, 34) sont respectivement moulés d'une seule pièce.

3. Structure avant de corps de voiture pour automobiles selon la revendication 1 ou 2, dans laquelle ledit support de radiateur (11) comprend une paire de portions de support droite et gauche (38, 38) formées sur lesdits éléments latéraux de support (32) et supportées par les extrémités avant desdits éléments latéraux (6), chaque portion de support (38) comprenant une paire de plaques latérales droite et gauche (60, 61) maintenant l'extrémité avant dudit élément latéral (6) depuis la droite et la gauche, des plaques supérieure et inférieure (62, 63) maintenant l'extrémité avant dudit élément latéral (6) depuis le dessus et le dessous, et une plaque de surface frontale (65) fermant l'ouverture de l'extrémité avant dans un espace interne (64) entouré par ces plaques (60 - 63), formant ainsi une forme de boîte qui ouvre vers l'arrière, chacune desdites portions de support (38) étant montée sur l'extrémité avant de chacun desdits éléments latéraux (6) depuis l'avant, ladite structure avant de corps de voiture pour automobiles étant en outre **caractérisée en ce que** :
l'extrémité arrière de ladite plaque supérieure (62) est positionnée plus vers l'arrière que l'extrémité arrière de ladite plaque inférieure (63).

4. Structure avant de corps de voiture pour automobiles selon la revendication 3, **caractérisée en ce que** :
lesdites plaques supérieure et inférieure (62, 63) sont moulées de telles sorte que la largeur (W2) de ladite plaque inférieure (63) est inférieure à la largeur (W1) de ladite plaque supérieure (62) en longueur du corps de voiture (2), et
lesdites plaques latérales (60, 61) sont moulées de telles sorte que la largeur (W3) en longueur du corps de voiture (2) diminue progressivement au fur et à mesure que l'on atteint le fond.

5. Structure avant de corps de voiture pour automobiles selon l'une quelconque des revendications 1 à 4, comprenant un corps principal du corps de voiture (4) supporté par lesdits éléments latéraux (6, 6) et ayant un espace (15) à l'intérieur, un capot (17) capable d'ouvrir et de fermer l'ouverture de l'extrémité supérieure (16) dans ledit espace (15) depuis le dessus, un mécanisme de blocage (21) disposé au voisinage de l'avant de l'extrémité supérieure avant dudit support de radiateur (11) pour bloquer de manière détachable l'extrémité avant dudit capot (17) sur ledit support de radiateur (11), un câble de déblocage (23) s'étendant depuis le mécanisme de blocage (21) pour transmettre une force de commande alimentée de l'extérieur audit mécanisme de blocage (21) pour permettre la libération du mécanisme de blocage (21) de l'état bloqué, et une grille (27) positionnée au-dessous de l'extrémité avant dudit capot (17) pour recouvrir, depuis l'avant, ledit mécanisme de blocage (21) et la portion (23a) dudit câble de déblocage (23) au voisinage dudit mécanisme de blocage (21), ladite structure avant de corps de voiture pour automobiles étant en outre **caractérisée en ce qu'**elle comprend
un corps de recouvrement (68) supporté par ledit support de radiateur (11) pour recouvrir ledit mécanisme de blocage (21) et la portion (23a) dudit câble de déblocage (23) depuis le dessous.

6. Structure avant de corps de voiture pour automobiles selon l'une quelconque des revendications 1 à 4, **caractérisée en ce qu'**elle comprend un corps principal du corps de voiture (4) supporté par lesdits éléments latéraux (6, 6) et ayant un espace (15) à l'intérieur, un capot (17) capable d'ouvrir et de fermer l'ouverture de l'extrémité supérieure (16) dans ledit espace (15) depuis le dessus, un mécanisme de blocage (21) bloquant de manière détachable l'extrémité avant dudit capot (17) sur la portion intermédiaire (39) de l'extrémité supérieure dudit support de radiateur (11) en largeur du corps de voiture (2), et des éléments de renforcement (92, 93) moulés d'une seule pièce sur une portion s'étendant de ladite portion intermédiaire (39) de l'extrémité supérieure du support de radiateur (11) jusqu'aux côtés pour s'étendre de manière oblique vers le bas depuis ladite portion intermédiaire (39) jusqu'aux côtés.

7. Structure avant de corps de voiture pour automobiles selon la revendication 6, comprenant un moyen de production de vent (47) pour accélérer le flux du vent en circulation traversant un radiateur (10) supporté par le support de radiateur (11), ledit moyen de production de vent (47) comprenant une console (48) moulée d'une seule pièce sur ledit support de radiateur (11) et un ventilateur (49) supporté par ladite console (48), ladite structure avant de corps de voiture pour automobiles étant en outre **caractérisée en ce que** :
ledit élément de renforcement (92) est constitué d'une portion (94) de ladite console (48).

8. Structure avant de corps de voiture pour automobiles selon la revendication 6 ou 7, **caractérisée en ce que** ledit support de radiateur (11) est moulé d'une seule pièce avec un récipient (87) pour stocker des pièces constitutives du véhicule, et ledit élément de renforcement (93) est constitué de la tôle d'enveloppe extérieure (88) dudit récipient (87) ou de la plaque de séparation (90) divisant l'espace interne (89) du récipient (87).

9. Structure avant de corps de voiture pour automobiles selon l'une quelconque des revendications 6 à 8, **caractérisée en ce que** lesdits éléments de renforcement (92, 93) sont constitués de nervures (95) moulées d'une seule pièce sur ledit support de radiateur (11).
